# EUROPEAN PATENT SPECIFICATION

(11) **EP 2 843 928 B1**
(45) Date of publication and mention of the grant of the patent: **14.10.2020**
(21) Application number: 14181635.5
(22) Date of filing: 20.08.2014
(51) Int. Cl.: H04N 1/00

(54) **Electronic device, and method for controlling power to control unit of electronic device**
Elektronische Vorrichtung und Verfahren zur Steuerung der Leistung zur Steuereinheit der elektronischen Vorrichtung
Dispositif électronique et procédé de commande de la puissance pour unité de commande de dispositif électronique

(30) Priority: 02.09.2013 JP 2013181348
(43) Date of publication of application: 04.03.2015
(73) Proprietor: CANON KABUSHIKI KAISHA, Ohta-ku Tokyo 146-8501 (JP)
(72) Inventor: Saisho, Kazuya, Ohta-ku, Tokyo (JP)
(74) Representative: Canon Europe Limited

(56) References cited:
- US-A1- 2006 214 512
- US-A1- 2009 237 141
- "ADM1186 Quad Voltage Up and Down Sequencer and Monitor with Programmable Timing", , 1 January 2009 (2009-01-01), XP55012241, U.S.A. Retrieved from the Internet: URL:http://www.analog.com/static/imported- files/data_sheets/ADM1186.pdf [retrieved on 2011-11-16]

## Description

### BACKGROUND OF THE INVENTION

### Field of the Invention

The present invention relates to an electronic device, and a method for controlling power to a control unit of the electronic device.

### Description of the Related Art

In the related art, it is known that, in an electronic device in which power is supplied at a plurality of power levels from a power supply apparatus, a sneak current occurring when a power supply of an entire system is turned on or off has to be prevented. Also, in a typical application specific integrated circuit (ASIC), a specification in which power is supplied at a plurality of power levels, that is, input/output (IO) power and CORE power are supplied is employed. At this time, in order to avoid a state in which an output of an IO terminal of the ASIC becomes unstable, it is known that the IO power has to be supplied before the CORE power at power-on, and the IO power has to be turned off after the CORE power at power-off.

In order to maintain a plurality of power supply timings in such an electronic device or ASIC, there is known a technique in which the power supply timings are controlled by using a delay circuit (see Japanese Patent Laid-Open No. 2004-266661).

In addition, there is known a technique in which the level of a preceding power supply voltage is monitored by using a comparator or a reset IC, subsequent power is controlled when the level exceeds or falls below a predetermined value, and thus a plurality of power supply timings are controlled.

ADM1186 Quad Voltage Up and Down Sequencer and Monitor with Programmable Timing.
URL: http://www.analog.com/media/en/technical-documentation/data-sheets/ADM1186.pdf
This user guide describes a four-channel voltage monitoring and sequencing device.

US 2006/0214512 describes a power source including a first power source applying a first voltage to a control unit and a second power source applying a second voltage to a unit controlled by the control unit. The power source includes a first power supplying unit, which includes a main power switch and a first relay and supplies electric power to the first power source, and a second power supplying unit, which includes the main power switch and a second relay and supplies the electric power to the second power source. The electric power is supplied to the first power source by turning on the main power switch, the first relay is turned on by a voltage output from the second power source. The electric power is supplied to the second power source by turning on the second relay by a voltage output from the first power source.

### SUMMARY OF THE INVENTION

An output of a power supply control circuit for power-on and an output of a power supply control circuit for power-off are connected to enable terminals of power generation circuits for generating power at a plurality of power levels. Because of this, there is required a selector circuit for switching, in accordance with a power supply status (power-on/off) of an electronic device or ASIC, a destination to which an enable terminal of each power generation circuit is connected, between the output of the power supply control circuit for power-on and the output of the power supply control circuit for power-off. This makes the configuration of all the power supply control circuits complicated and results in an increase in cost.

The present invention has been accomplished in order to solve the above problems. The present invention provides a mechanism in which turn-on control and turn-off control of a plurality of power supplies requested by a control unit of an electronic device are efficiently performed with a simple circuit configuration.

The present invention in its first aspect provides an electronic device as specified in claims 1 to 5.

The present invention in its second aspect provides a method for controlling power to a control unit of an electronic device as specified in claim 6.

Further features of the present invention will become apparent from the following description of exemplary embodiments with reference to the attached drawings.

### BRIEF DESCRIPTION OF THE DRAWINGS

Fig. 1 illustrates the external appearance of an image forming apparatus to which a power supply control apparatus is applicable.
Fig. 2 is a block diagram illustrating the internal configuration of the image forming apparatus illustrated in Fig. 1.
Fig. 3 is a block diagram illustrating a detailed configuration of a power supply control unit illustrated in Fig. 2.
Figs. 4A to 4C illustrate the configurations of switches of the power supply control unit illustrated in Fig. 2.
Fig. 5 is a flowchart illustrating a control method executed by the power supply control apparatus.
Fig. 6 is a flowchart illustrating a control method executed by the power supply control apparatus.
Fig. 7 is a block diagram illustrating the configuration of a power-on control unit illustrated in Fig. 3.
Fig. 8 is a timing chart illustrating operations performed by the power-on control unit illustrated in Fig. 7.
Fig. 9 is a block diagram illustrating the configuration of a power-off control unit illustrated in Fig. 3.
Figs. 10A to 10C illustrate the internal circuit configurations of discharge circuits illustrated in Fig. 3.
Fig. 11 is a timing chart illustrating operations performed by the power-off control unit illustrated in Fig. 3.
Fig. 12 is a block diagram illustrating the configuration of a power supply control apparatus.
Fig. 13 is a block diagram illustrating the configuration of the power supply control apparatus.

### DESCRIPTION OF THE EMBODIMENTS

Exemplary embodiments for implementing the present invention will be described below with reference to the drawings.

### Description of System Configuration

### First Embodiment

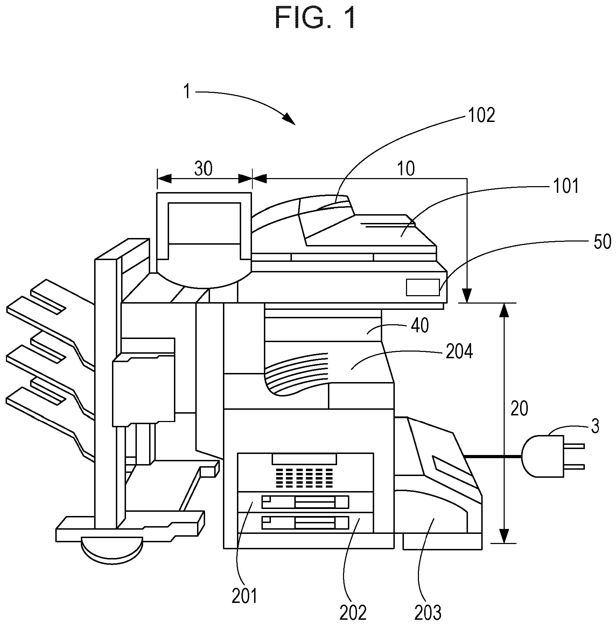

Fig. 1 illustrates the external appearance of an image forming apparatus to which a power supply control apparatus according to a first embodiment is applicable. Besides, an electronic device to which the power supply control apparatus according to this embodiment is applicable is not limited to the foregoing image forming apparatus, and examples of the electronic device include a printing apparatus, an image processing apparatus, a facsimile machine, a scanner device, an information processing apparatus, and a multi-function printer (MFP). In this embodiment, an example in which the power supply control apparatus supplies direct-current (DC) power having a different potential to a control unit of the electronic device will be described. Here, as such electronic devices, there are the foregoing image forming apparatus, a printing apparatus, a multifunction image processing apparatus, a facsimile machine, a scanner device, and an information processing apparatus.

In Fig. 1, an image forming apparatus 1 includes a scanner unit 10 serving as an image input device, a printer unit 20 serving as an image output device, and an operation unit 30 serving as a user interface. The image forming apparatus 1 further includes a controller unit 40 that controls the entire image forming apparatus, a power supply plug 3 serving as a source for supplying power to the image forming apparatus 1, and a main switch 50 for supplying power to the image forming apparatus 1. The power supply plug 3 is connected to an alternating-current (AC) outlet, which is not illustrated.

The scanner unit 10 converts information of an image into an electrical signal by inputting reflected light obtained by performing exposure scanning on the image on a document into a charge coupled device (CCD). The scanner unit 10 further converts the electrical signal into a luminance signal composed of red (R), green (G), and blue (B), and outputs, as image data, the luminance signal to the controller unit 40. Documents are placed on a tray 102 of a document feeder 101. When a user gives an instruction to start scanning via the operation unit 30, a document scanning instruction is given from the controller unit 40 to the scanner unit 10. In response to this instruction, the scanner unit 10 feeds the documents one by one from the tray 102 of the document feeder 101, and scans the documents. As for document scanning, single or double-sided scanning of the documents is performed by controlling conveyance of the documents in accordance with a scanning condition set via the operation unit 30.

The printer unit 20 is an image forming device that forms image data received from the controller unit 40 on paper. In this embodiment, an image forming method is an electrophotographic method using a photosensitive drum or a photosensitive belt; however, the present invention is not limited to this. For example, an ink-jet method of discharging ink from a minute nozzle array to print data on paper is also applicable. The printer unit 20 includes a plurality of paper cassettes 201, 202, and 203 which enable selection of a different paper size or a different paper orientation. Paper with data printed thereon is ejected onto a paper ejection tray 204. The controller unit 40 is a unit that controls an operation performed by the image forming apparatus 1, and performs data transmission/reception, data conversion, and electric power control.

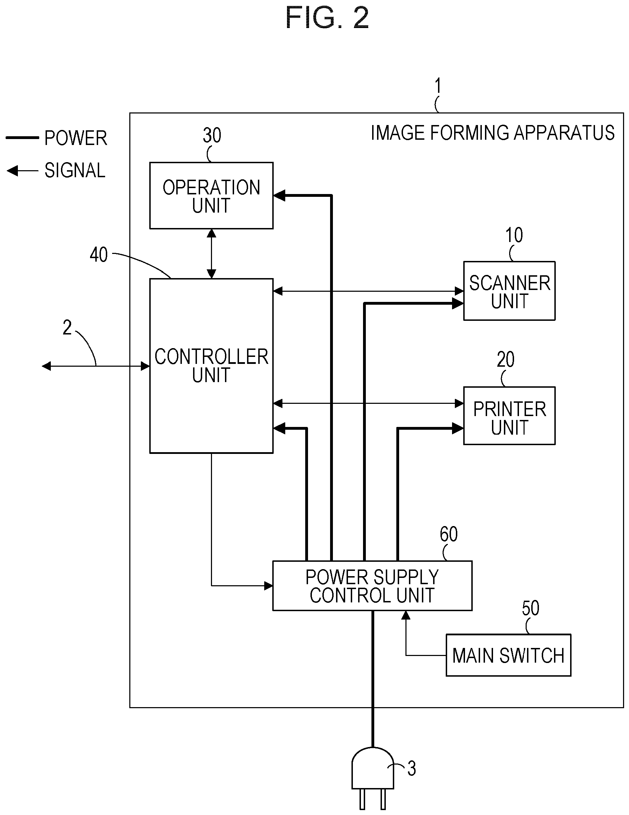

Fig. 2 is a block diagram illustrating the internal configuration of the image forming apparatus illustrated in Fig. 1. Power supply processing in the image forming apparatus 1 will be described below with reference to Fig. 2.

In Fig. 2, first, in the case where the image forming apparatus 1 is powered on, the user turns on the main switch 50, and a power supply control unit 60 thereby converts AC power supplied from the power supply plug 3 into DC power having a predetermined potential. As a result, power is supplied to the scanner unit 10, the printer unit 20, the operation unit 30, and controller unit 40.

In the case where the image forming apparatus 1 is powered off, the user turns off the main switch 50, and the power supply control unit 60 thereby stops power to the scanner unit 10, the printer unit 20, the operation unit 30, and the controller unit 40.

In the case where the image forming apparatus 1 performs a printing operation, job data is transferred to the controller unit 40 via a local area network (LAN) 2 and temporarily stored in a memory included in the controller unit 40. The memory here includes a random access memory (RAM) 402 and a hard disk drive (HDD) 404, which are described later.

The controller unit 40 converts the stored job data into image data and transfers it to the printer unit 20. The printer unit 20 prints the image data received under the control of the controller unit 40 on recording paper and ejects the recording paper outside the apparatus.

In the case where the image forming apparatus 1 performs a scanning operation, the user places a document on the scanner unit 10, operates a button referring to a screen of the operation unit 30 to thereby set a scanning operation, and gives an instruction to start the operation. The scanner unit 10 optically scans the document and converts it into image data under the control of the controller unit 40. The converted image data is temporarily stored in the memory included in the controller unit 40, and then is transferred to a destination specified in advance via the operation unit 30.

In the case where the image forming apparatus 1 performs a copy operation, the user places a document on the scanner unit 10, operates a button referring to the screen of the operation unit 30 to thereby set a copy operation, and gives an instruction to start the copy operation. The scanner unit 10 optically scans the document and converts it into image data under the control of the controller unit 40. After the converted image data is temporarily stored in the memory included in the controller unit 40, the controller unit 40 converts a data format of the image data into a data format that the printer unit 20 can use, and the printer unit 20 prints the image data on recording paper and ejects the recording paper outside the apparatus.

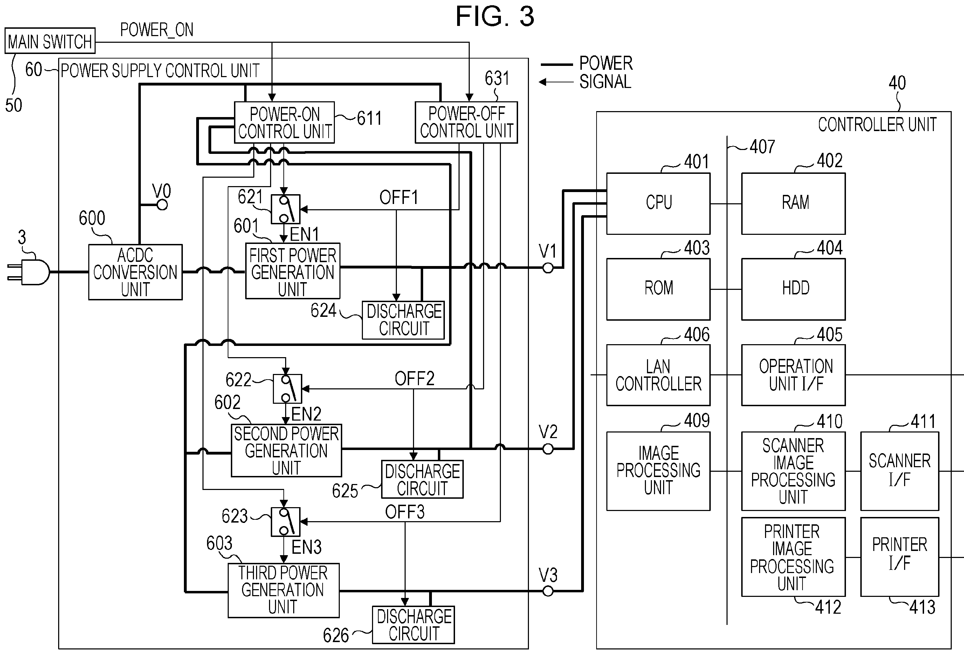

Fig. 3 is a block diagram illustrating a detailed configuration of the power supply control unit 60 illustrated in Fig. 2.

In Fig. 3, the power supply control unit 60 includes the main switch 50, the power supply plug 3 serving as a source for supplying power, and an ACDC conversion unit 600 that converts AC power input from the power supply plug 3 into DC power. The power supply control unit 60 further includes a first power generation unit 601, a second power generation unit 602, and a third power generation unit 603 that generate a plurality of power supply voltages.

The power supply control unit 60 includes a power-on control unit 611 that controls a power-on operation performed on the first power generation unit 601, the second power generation unit 602, and the third power generation unit 603 which each generate DC power having a different potential requested by the controller unit 40. The power supply control unit 60 further includes a power-off control unit 631 that controls a power-off operation, and a switch (SW) 621, a SW 622, and a SW 623 that each turn off power. The power supply control unit 60 further includes a discharge circuit 624, a discharge circuit 625, and a discharge circuit 626 that control fall time periods taken for the first power generation unit 601, the second power generation unit 602, and the third power generation unit 603 to be powered off, respectively.

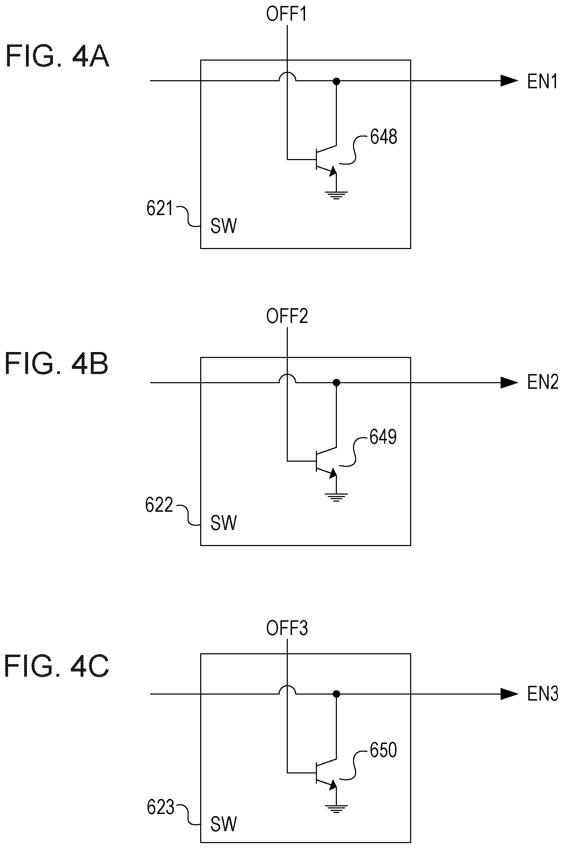

Here, the first power generation unit 601, the second power generation unit 602, and the third power generation unit 603 are each composed of a DCDC converter with an enable control function. As illustrated in Figs. 4A to 4C, the SW 621, the SW 622, and the SW 623 that each turn off power have hard-wired configurations with switching field-effect transistors (FETs) 648, 649, and 650, respectively.

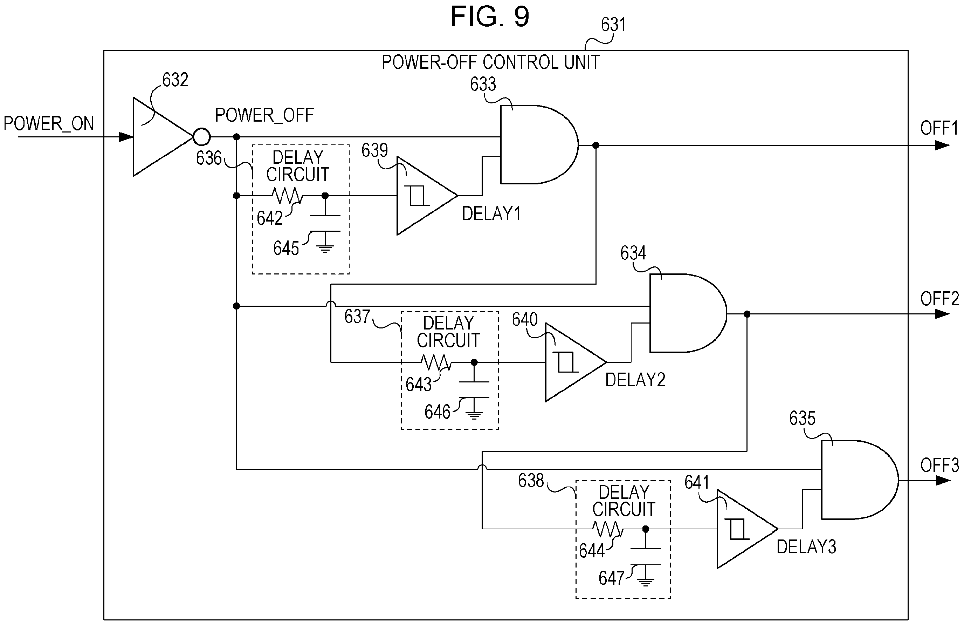

The SW 621, the SW 622, and the SW 623 have functions of disabling enable signals EN1, EN2, and EN3 for the first power generation unit 601, the second power generation unit 602, and the third power generation unit 603, respectively. In this way, in this embodiment, the power-off control unit 631 gives power-off instructions after different delay times corresponding to the first power generation unit 601, the second power generation unit 602, and the third power generation unit 603, respectively. Details will be discussed later with reference to Fig. 9.

The discharge circuit 624, the discharge circuit 625, and the discharge circuit 626 have discharge functions of causing power V1, power V2, and power V3 to fall quickly in power level, respectively. Because the scanner unit 10, the printer unit 20, the operation unit 30, and the controller unit 40 to which the power V1, the power V2, and the power V3 are supplied each include a capacitor component, electric charge is being accumulated in the capacitor component during power-on.

In order to cause the power V1, the power V2, and the power V3 to fall quickly in power level from when power has been turned off, the electric charge accumulated in the capacitor component has to be removed. Because of this, the discharge circuit 624, the discharge circuit 625, and the discharge circuit 626 are provided for outputs of the power generation units, respectively. Here, the reason why enable control performed when the power generation units for the power V1, the power V2, and the power V3 are turned on and when they are turned off can be implemented by the hard-wired configurations with the switching FETs 648, 649, and 650 is because a control method for power-on and a control method for power-off are configured to differ from each other. Thus, regardless of whether the power-on control unit 611 performs control for enabling or disabling the enable signals EN1, EN2, and EN3, the power-off control unit 631 can forcibly disable the enable signals EN1, EN2, and EN3.

Hence, such a simple circuit configuration as described in this embodiment that does not require such a selector circuit as described in the related art can be provided.

The power V2 and the power V3 generated by the second power generation unit 602 and the third power generation unit 603 are individually supplied to a central processing unit (CPU) 401 included in the controller unit 40. Actually, power other than the power V2 and the power V3 generated by the second power generation unit 602 and the third power generation unit 603 is also supplied to the scanner unit 10, the printer unit 20, the operation unit 30, the controller unit 40, and the like. For the sake of simplicity here, supply of power to the CPU 401 included in the controller unit 40 will be described.

The controller unit 40 is electrically connected to the scanner unit 10 and the printer unit 20, and is also connected to a personal computer (PC), an external apparatus, or the like via the LAN 2 or the like. This enables input/output of image data or device information.

The CPU 401 performs centralized control of access to/from various devices being connected to the controller unit 40 on the basis of a control program and the like stored in a read only memory (ROM) 403, and also performs centralized control of various processes performed in the controller unit 40. The RAM 402 is a system work memory in which the CPU 401 operates and also a memory in which image data is temporarily stored. This RAM 402 includes a static RAM (SRAM), information stored in which is retained even after power is turned off, and a dynamic RAM (DRAM), information stored in which is deleted after power is turned off. The ROM 403 stores a boot program for the apparatus, and the like. The HDD 404 is a hard disk drive and capable of storing system software or image data.

An operation unit interface (I/F) 405 is an interface unit that connects a system bus 407 and the operation unit 30. The operation unit I/F 405 receives image data to be displayed on the operation unit 30 from the system bus 407 and outputs it to the operation unit 30, and also outputs information input via the operation unit 30 to the system bus 407.

A LAN controller 406 connects to the LAN 2 and the system bus 407, and performs input/output control of information.

An image processing unit 409 is a unit that performs image processing operations, and is capable of reading image data stored in the RAM 402 and performing image processing operations, such as enlargement or reduction of Joint Photographic Experts Group (JPEG) image data, Joint Bi-level Image experts Group (JBIG) image data, or the like, and color adjustment of image data.

A scanner image processing unit 410 corrects, modifies, and edits image data received from the scanner unit 10 via a scanner I/F 411. Besides, the scanner image processing unit 410 determines whether received image data is data based on a color document, monochrome document, text document, photographic document, or the like. Then, a determination result is attached to the image data. Such attached information is referred to as attribute data.

A printer image processing unit 412 performs image processing on the image data referring to attribute data attached to this image data. The image data subjected to the image processing is output to the printer unit 20 via a printer I/F 413.

A power supply control process flow performed when the main switch 50 is turned on or off will be described below.

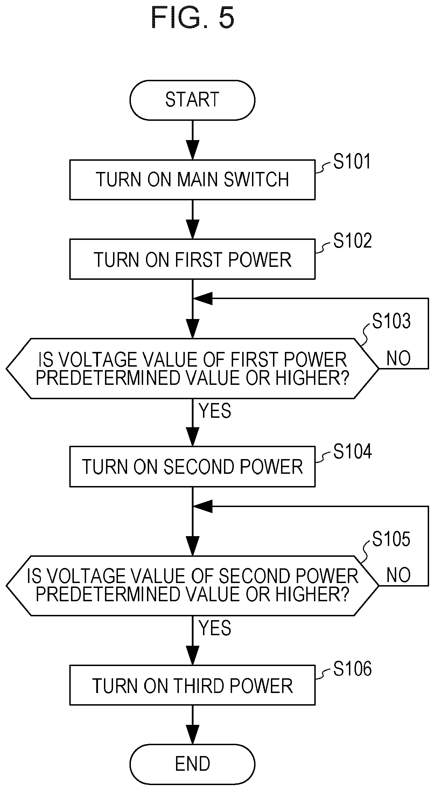

Fig. 5 is a flowchart illustrating a control method executed by the power supply control apparatus according to this embodiment. An example of a power-on process performed in the power supply control unit 60 is given here. Each step is implemented by hardware included in the power supply control unit 60 executing sequence control. A power supply control process of turning on each power generation unit while checking that power of each power generation unit has become a predetermined potential or higher after the main switch 50 has been turned on will be described in detail below.

The ACDC conversion unit 600 converts AC power from the power supply plug 3 into DC power, and supplies power to the power-on control unit 611, the power-off control unit 631, and the first power generation unit 601. The main switch 50 is turned on (S101). Subsequently, in response to the fact that a POWER_ON signal has been enabled, the power-on control unit 611 enables an enable signal EN1 for the first power generation unit 601 (S102). The first power generation unit 601 causes power V1 to rise in power level by using the power input from the ACDC conversion unit 600 and the enable signal EN1 from the power-on control unit 611. The power V1 acts as power to be input to the second power generation unit 602 and the third power generation unit 603.

The power V1 is also input to the power-on control unit 611 as well. When the power-on control unit 611 monitors a voltage value of the power V1 from the first power generation unit 601 and detects that the voltage value of the power V1 has become higher than or equal to a predetermined voltage value set in advance (S103), the power-on control unit 611 enables an enable signal EN2 for the second power generation unit 602 (S104). The second power generation unit 602 generates power V2 by using the power V1 input from the first power generation unit 601 and the enable signal EN2 from the power-on control unit 611, and outputs the power V2.

The power V2 is input to the power-on control unit 611. When the power-on control unit 611 monitors a voltage value of the power V2 and detects that the voltage value of the power V2 has become higher than or equal to a predetermined voltage value set in advance (S105), the power-on control unit 611 enables an enable signal EN3 for the third power generation unit 603 (S106). The third power generation unit 603 generates power V3 by using the power V1 from the first power generation unit 601 and the enable signal EN3 from the power-on control unit 611, and outputs the power V3.

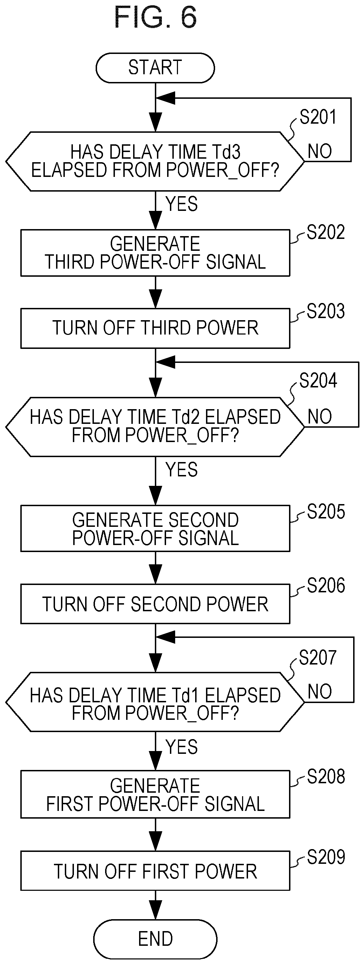

Fig. 6 is a flowchart illustrating a control method executed by the power supply control apparatus according to this embodiment. An example of a power-off process performed in the power supply control unit 60 is given here. Each step is implemented by the hardware included in the power supply control unit 60 executing sequence control. A power supply control process performed when the main switch 50 is turned off will be described in detail below.

When a delay time Td3 has elapsed since the main switch 50 was turned off (S201), in response to the fact that the POWER_ON signal has been disabled, the power-off control unit 631 turns off the SW 623 (gives a power-off instruction) (S202). This disables the enable signal EN3 for the third power generation unit 603. Then, output of the power V3 of the third power generation unit 603 is stopped (S203). Because of this, the third power generation unit 603 changes into a power-off state.

Similarly, when a delay time Td2 has elapsed since the main switch 50 was turned off (S204), the power-off control unit 631 turns off the SW 622 (S205). This disables the enable signal EN2 for the second power generation unit 602, and output of the power V2 of the second power generation unit 602 is stopped (S206). In addition, when a delay time Td1 has elapsed since the main switch 50 was turned off (S207), the power-off control unit 631 turns off the SW 621 (S208). This disables the enable signal EN1 for the first power generation unit 601, and output of the power V1 of the first power generation unit 601 is stopped (S209).

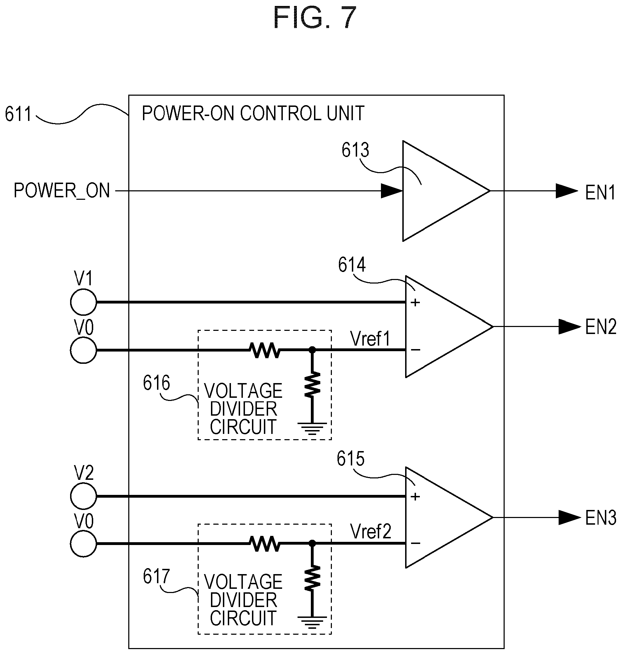

Fig. 7 is a block diagram illustrating the configuration of the power-on control unit 611 illustrated in Fig. 3.

In Fig. 7, the power-on control unit 611 includes a buffer 613, a comparator 614, a comparator 615, a voltage divider circuit 616 that generates a reference voltage Vref1, and a voltage divider circuit 617 that generates a reference voltage Vref2.

As described above, when the main switch 50 is turned on, the power-on control unit 611 detects that the main switch 50 has been turned on. Via the buffer 613, a detected signal makes the enable signal EN1 for the first power generation unit 601 Hi and the enable signal EN1 is output.

In the comparator 614, the power V1 from the first power generation unit 601 is input to a + input terminal, and a predetermined reference voltage Vref1 set in advance is input to a - input terminal.

The reference voltage Vref1 is generated by the voltage divider circuit 616 performing resistive division of a power V0. When the voltage of the power V1 becomes the reference voltage Vref1 or higher, the enable signal EN2 for the second power generation unit 602 is made Hi and is output.

Here, the reference voltage Vref1 is set to a value used for determining that the power V1 has risen in power level. Similarly, in the comparator 615, the voltage of the power V2 input from the second power generation unit 602 is input to a + input terminal, and a predetermined reference voltage Vref2 set in advance is input to a - input terminal of the comparator 615. The reference voltage Vref2 is generated by the voltage divider circuit 617 performing resistive division of the power V0.

When the voltage of the power V2 becomes the reference voltage Vref2 or higher, the enable signal EN3 for the third power generation unit 603 is made Hi and is output. In this way, a power-on sequence is generated using the comparators and the reference voltages Vref's at power-on. This is done to prevent, if an electrical failure occurs in any power generation unit of a plurality of power generation units and power is not output, a power generation unit subsequent to the faulty power generation unit from outputting power. If the power generation unit subsequent to the faulty power generation unit outputs power, the possibility of the occurrence of a sneak current described in the related art arises.

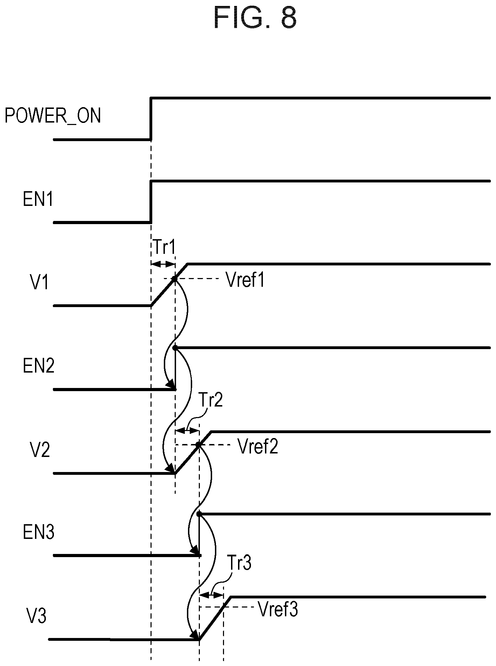

Fig. 8 is a timing chart illustrating operations performed by the power-on control unit 611 illustrated in Fig. 7. Operations performed by the power-on control unit 611 involved in the power-on control flow illustrated in Fig. 5 will be described below.

When the enable signals EN1, EN2, and EN3 become Hi, the power V1, the power V2, and the power V3 output by the first power generation unit 601, the second power generation unit 602, and the third power generation unit 603 start to rise in power level, respectively. At this time, there occur rise time periods Tr1, Tr2, and Tr3 taken for the power V1, the power V2, and the power V3 to reach reference voltages Vref1 (voltage divider circuit 616), Vref2 (voltage divider circuit 617), Vref3 (voltage divider circuit 618) used for determining that the power V1, the power V2, and the power V3 have risen in power level, respectively.

That is, when the main switch 50 is turned on, in terms of power level, the power V1 succeeds in rising after Tr1, the power V2 succeeds in rising after Tr1 + Tr2, and the power V3 succeeds in rising after Tr1 + Tr2 + Tr3.

Fig. 9 is a block diagram illustrating the configuration of the power-off control unit 631 illustrated in Fig. 3. Operations performed by the power-off control unit 631 involved in the power-off control flow illustrated in Fig. 6 will be described below. Here, an example of a delay circuit is an analog circuit that includes a resistor and a capacitor.

In Fig. 9, the power-off control unit 631 includes an inverter 632, AND gate circuits 633, 634, and 635, delay circuits 636, 637, and 638 each including a resistor and a capacitor, and Schmitt buffers 639, 640, and 641. Here, the delay circuit 636 includes a resistor 642 and a capacitor 645. Also, the delay circuit 637 includes a resistor 643 and a capacitor 646. Furthermore, the delay circuit 638 includes a resistor 644 and a capacitor 647. Besides, delay times of the delay circuits 636 to 638 for an off instruction are determined in accordance with the resistor 642 and capacitor 645, the resistor 643 and capacitor 646, and the resistor 644 and capacitor 647, respectively.

As described above, when the main switch 50 is turned off, the POWER_ON signal becomes Low, and the power-off control unit 631 detects that the main switch 50 has been turned off. The POWER_ON signal is input to the inverter 632, and a POWER_OFF signal which is a logical inversion of the POWER_ON signal is output.

The AND gate circuit 633 is a logic circuit having two inputs and one output. The POWER_OFF signal is input to one of the two inputs. A DELAY1 signal which is obtained by delaying the POWER_OFF signal with the delay circuit 636 and the Schmitt buffer 639 is input to the other of the two inputs.

At this time, a delay time Td1 of the DELAY1 signal with respect to the POWER_OFF signal is determined in accordance with a resistance value of the resistor 642 and a capacitance value of the capacitor 645 which are included in the delay circuit 636. The AND gate circuit 633 outputs an OFF1 signal, which is the product of the POWER_OFF signal and the DELAY1 signal.

As a control signal for disabling the enable signal EN1 for the first power generation unit 601, the OFF1 signal is input to the SW 621. This can cause the output power V1 to start to fall in power level at an intended point in time. In addition, as a control signal for completing, within a predetermined time period, the fall of the power V1 output from the first power generation unit 601, the OFF1 signal is also input to the discharge circuit 624. The AND gate circuit 634 is also a logic circuit having two inputs and one output. The POWER_OFF signal is input to one of the two inputs. A DELAY2 signal which is obtained by delaying the OFF1 signal with the delay circuit 637 and the Schmitt buffer 640 is input to the other of the two inputs.

At this time, a delay time Td2 of the DELAY2 signal with respect to the POWER_OFF signal is determined in accordance with a resistance value of the resistor 643 and a capacitance value of the capacitor 646 which are included in the delay circuit 637. The AND gate circuit 634 outputs an OFF2 signal, which is the product of the POWER_OFF signal and the DELAY2 signal. As a control signal for disabling the enable signal EN2 for the second power generation unit 602, the OFF2 signal is input to the SW 622. This can cause the output power V2 to start to fall in power level at an intended point in time. In addition, as a control signal for completing, within a predetermined time period, the fall of the power V2 output from the second power generation unit 602, the OFF2 signal is also input to the discharge circuit 625. The AND gate circuit 635 is also a logic circuit having two inputs and one output. The POWER_OFF signal is input to one of the two inputs. A DELAY3 signal which is obtained by delaying the OFF2 signal with the delay circuit 638 and the Schmitt buffer 641 is input to the other of the two inputs.

At this time, a delay time Td3 of the DELAY3 signal with respect to the POWER_OFF signal is determined in accordance with a resistance value of the resistor 644 and a capacitance value of the capacitor 647 which are included in the delay circuit 638. The AND gate circuit 635 outputs an OFF3 signal, which is the product of the POWER_OFF signal and the DELAY3 signal. As a control signal for disabling the enable signal EN3 for the third power generation unit 603, the OFF3 signal is input to the SW 623. This can cause the output power V3 to start to fall in power level at an intended point in time. In addition, as a control signal for completing, within a predetermined time period, the fall of the power V3 output from the third power generation unit 603, the OFF3 signal is also input to the discharge circuit 626.

In this way, a power-off sequence is generated using the delay circuits and the AND gate circuits at power-off. This is because the case where an electrical failure occurs in any power generation unit of a plurality of power generation units and power is not stopped is very rare in comparison with the above-mentioned case at power-on. It is assumed that an electrical failure occurs in any power generation unit of a plurality of power generation units and a state in which power is not stopped occurs. In this case, if the first power generation unit 601 can be powered off with certainty, the second power generation unit 602 and the third power generation unit 603 are also powered off, and the occurrence of a prolonged sneak current can therefore be avoided.

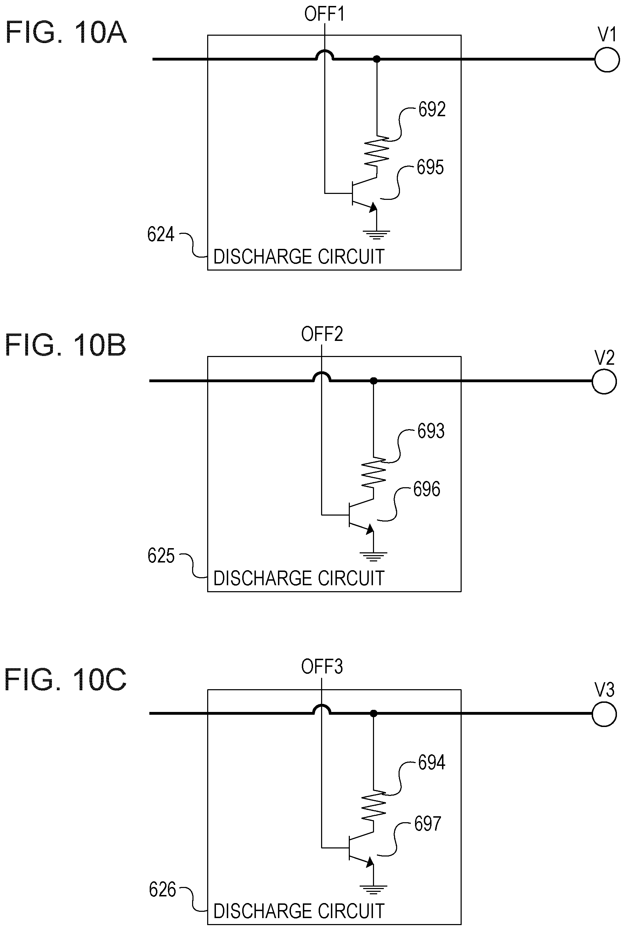

Figs. 10A to 10C illustrate the internal circuit configurations of the discharge circuits 624, 625, and 626 illustrated in Fig. 3.

In Figs. 10A to 10C, the discharge circuits 624 to 626 respectively include transistors 695 to 697 that discharge the output power V1 to the output power V3, and resistors 692 to 694 that adjusts fall time periods Tf1 to Tf3 of the output power V1 to the output power V3. The lower resistance values of the resistors 692, 693, and 694 are, the shorter the fall time periods Tf1, Tf2, and Tf3 can be set. Besides, FETs can be included in place of the transistors 695 to 697.

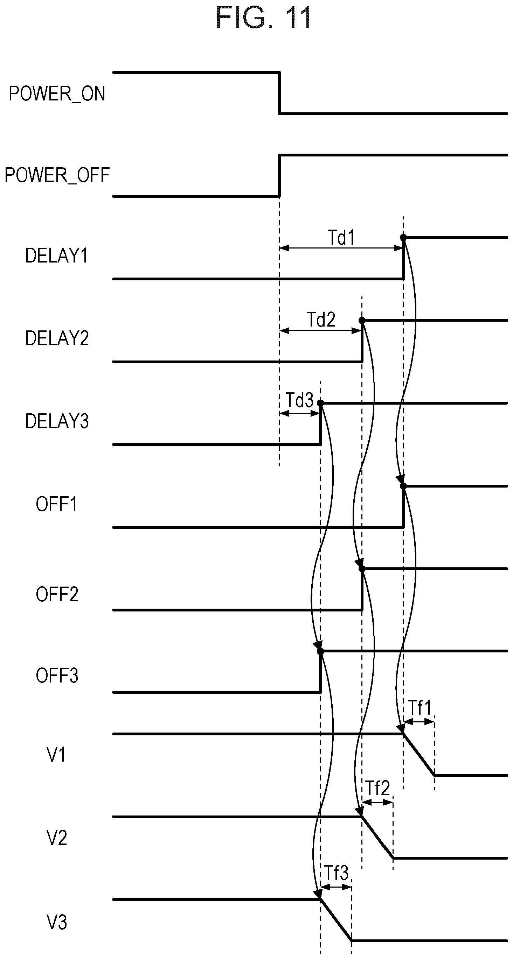

Fig. 11 is a timing chart illustrating operations performed by the power-off control unit 631 illustrated in Fig. 3. Operations performed by the power-off control unit 631 involved in the power-off control flow illustrated in Fig. 6 will be described below.

In Fig. 11, the SW 621, the SW 622, and the SW 623 are turned off by the OFF1 signal, the OFF2 signal, and the OFF3 signal, respectively. When the enable signals EN1, EN2, and EN3 thereby become Low, the power V1, the power V2, and the power V3 output by the first power generation unit 601, the second power generation unit 602, and the third power generation unit 603 start to fall in power level, respectively.

At this time, points in time at which the power V1, the power V2, and the power V3 start to fall are points in time after the delay times Td1, Td2, and Td3 have elapsed since the POWER_OFF signal was output, respectively. Here, although the power V1, the power V2, and the power V3 are supplied to the scanner unit 10, the printer unit 20, the operation unit 30, and the controller unit 40, in order to prevent a sneak current, the order in which the power V1, the power V2, and the power V3 are turned off is the reverse order of that at power-on.

Thus, the power is turned off in the order of the power V3, the power V2, and the power V1. In order to do this, after the fall of the power V3 in power level has been completed, the power V2 is caused to start to fall. Then, after the fall of the power V2 has been completed, the power V1 is caused to start to fall. In this way, resistance values of the resistors 642, 643, and 644 and capacitance values of the capacitors 645, 646, and 647 which are respectively included in the delay circuits 636, 637, and 638 are set so that the delay times Td3 to Td1 and the fall time periods Tf1 to Tf3 satisfy the relationship of Td3 + Tf3 < Td2 + Tf2 < Td1.

Hence, on/off control of a plurality of power supplies can be implemented with a simple circuit configuration that does not require a selector circuit for switching between a power supply control circuit for power-on and a power supply control circuit for power-off.

### Second Embodiment

In a second embodiment, in the power-on control unit 611 illustrated in Fig. 7 in the first embodiment, the case where reset ICs are included in place of the comparators will be described. Also, in the power-off control unit 631 illustrated in Fig. 9 in the first embodiment, the case where flip-flop circuits are included in place of the delay circuits and the Schmitt buffers will be described. Besides, a description of the same hardware configuration as that described in the first embodiment will be omitted.

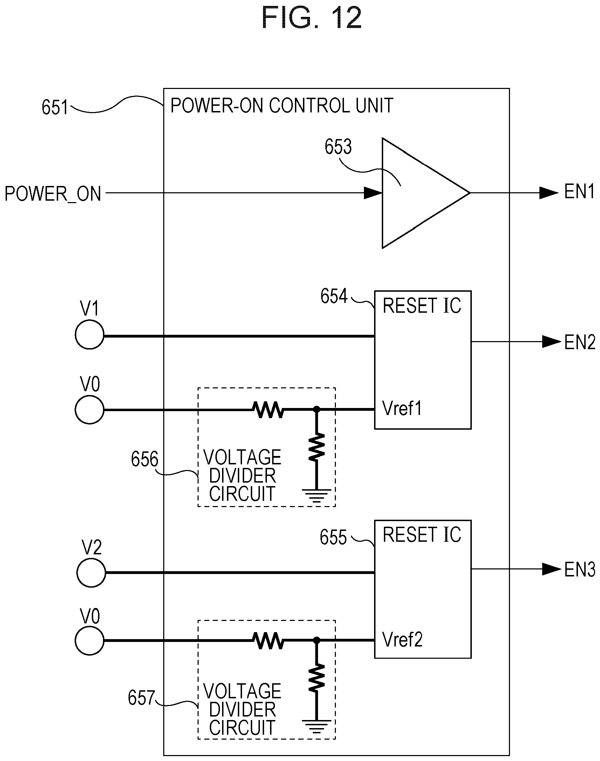

Fig. 12 is a block diagram illustrating the configuration of a power supply control apparatus according to this embodiment. An example of another configuration of the power-on control unit 611 illustrated in Fig. 3 is given here.

In Fig. 12, a power-on control unit 651 includes a buffer 653, a reset IC 654, a reset IC 655, a voltage divider circuit 656, and a voltage divider circuit 657. When the main switch 50 is turned on, the power-on control unit 651 detects that the main switch 50 has been turned on.

Via the buffer 653, a detected signal makes the enable signal EN1 for the first power generation unit 601 Hi and the enable signal EN1 is output. In the reset IC 654, the power V1 from the first power generation unit 601 is input to an input terminal, and a predetermined reference voltage Vref1 set in advance is input to a reference voltage terminal. The reference voltage Vref1 is generated by the voltage divider circuit 656 performing resistive division of a power V0. When the voltage of the power V1 becomes the reference voltage Vref1 or higher, the enable signal EN2 for the second power generation unit 602 is made Hi and is output. Here, the reference voltage Vref1 is set to a value used for determining that the power V1 has risen in power level.

Similarly, in the reset IC 655, the voltage of the power V2 input from the second power generation unit 602 is input to an input terminal, and a predetermined reference voltage Vref2 set in advance is input to a reference voltage terminal. The reference voltage Vref2 is generated by the voltage divider circuit 657 performing resistive division of the power V0. When the voltage of the power V2 becomes the reference voltage Vref2 or higher, the enable signal EN3 for the third power generation unit 603 is made Hi and is output.

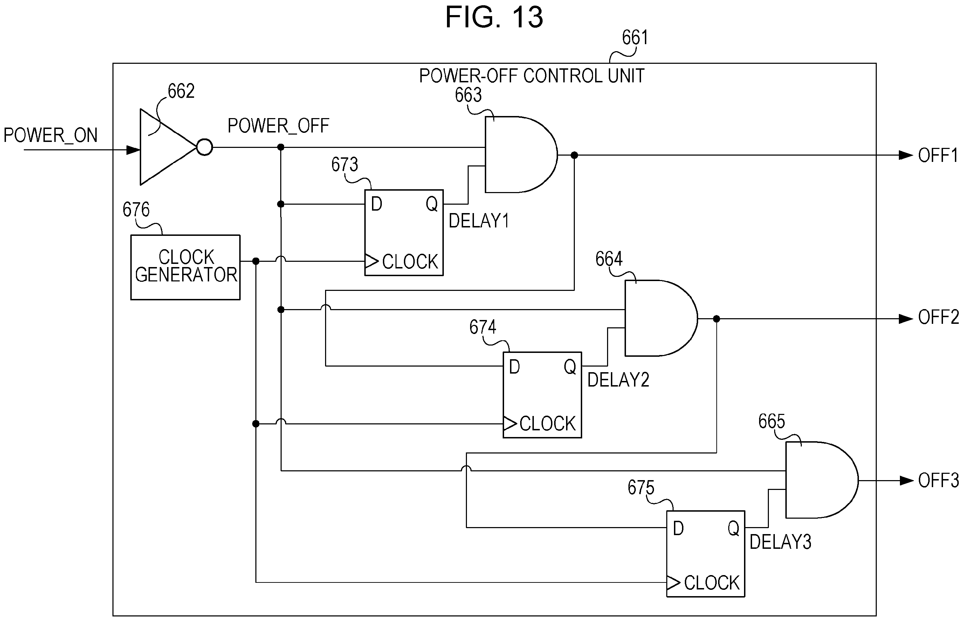

Fig. 13 is a block diagram illustrating the configuration of the power supply control apparatus according to this embodiment. An example of another configuration of the power-off control unit 631 illustrated in Fig. 3 is given here. In this example, flip-flop circuits are included in place of delay circuits.

In Fig. 13, a power-off control unit 661 includes an inverter 662, AND gate circuits 663, 664, and 665, flip-flop circuits 673, 674, and 675, and a clock generator 676. When the main switch 50 is turned off, the POWER_ON signal becomes Low, and the power-off control unit 661 detects that the main switch 50 has been turned off. Here, a common clock is input from the clock generator 676 to the flip-flop circuits 673, 674, and 675. Also, gate outputs from the AND gate circuits 663 and 664 are input to D inputs of the flip-flop circuits 674 and 675, respectively.

The POWER_ON signal is input to the inverter 662, and a POWER_OFF signal which is a logical inversion of the POWER_ON signal is output. The AND gate circuit 663 is a logic circuit having two inputs and one output. The POWER_OFF signal is input to one of the two inputs. A DELAY1 signal which is obtained by delaying the POWER_OFF signal with the flip-flop circuit 673 is input to the other of the two inputs. At this time, the flip-flop circuit 673 synchronizes the input POWER_OFF signal with a clock signal generated by the clock generator 676, and outputs a clock synchronization signal derived from the POWER_OFF signal.

For this reason, a delay time Td1 of the DELAY1 signal with respect to the POWER_OFF signal is determined in accordance with a period of one pulse of a clock generated by the clock generator 676. The AND gate circuit 663 outputs an OFF1 signal, which is the product of the POWER_OFF signal and the DELAY1 signal. As a control signal for disabling the enable signal EN1 for the first power generation unit 601, the OFF1 signal is input to the SW 621. This can cause the output power V1 to start to fall in power level at an intended point in time.

In addition, as a control signal for completing, within a predetermined time period, the fall of the power V1 output from the first power generation unit 601, the OFF1 signal is also input to the discharge circuit 624. The AND gate circuit 664 and the AND gate circuit 665 are also each a logic circuit having two inputs and one output. The POWER_OFF signal is input to one of the two inputs. A DELAY2 signal and a DELAY3 signal which are obtained by respectively delaying the OFF1 signal and an OFF2 signal with the flip-flop circuits 674 and 675 are each input to the other of the two inputs.

At this time, the flip-flop circuits 674 and 675 each synchronize the input POWER_OFF signal with the clock signal generated by the clock generator 676, and output a clock synchronization signal derived from the POWER_OFF signal. As control signals for respectively disabling the enable signals EN2 and EN3 for the second power generation unit 602 and the third power generation unit 603, the OFF2 signal and an OFF3 signal respectively output from the AND gate circuit 664 and the AND gate circuit 665 are input to the SW 622 and the SW 623, respectively. This can cause the output power V2 and the output power V3 to start to fall in power level at intended points in time, respectively.

In addition, as control signals for completing, within predetermined time periods, the falls of the power V2 and the power V3 respectively output from the second power generation unit 602 and the third power generation unit 603, respectively, the OFF2 signal and the OFF3 signal are also input to the discharge circuit 625 and the discharge circuit 626, respectively.

The processes of the present invention can also be implemented by causing a processing apparatus (CPU or processor) of, for example, a personal computer (computer) to execute software (program) acquired via a network or various storage media.

The present invention is not limited to the above-described embodiments, but is defined by the claims.

According to the present invention, turn-on control and turn-off control of a plurality of power supplies requested by a control unit of an electronic device are efficiently performed with a simple circuit configuration.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An electronic device comprising:
a processor (401)
first voltage generation means (601) configured to generate a first voltage to be supplied to the processor (401) in accordance with a first enable signal;
second voltage generation means (602) configured to generate a second voltage to be supplied to the processor (401)in accordance with a second enable signal;
third voltage generation means (603) configured to generate a third voltage to be supplied to the processor (401) in accordance with a third enable signal;
power-on control means (611) configured to output the first enable signal to enable the first voltage generation means (601) to generate the first voltage in accordance with a power-on instruction, output, when the first voltage generated by the first voltage generation means (601) is higher than or equal to a predetermined voltage, a second enable signal to enable the second voltage generation means (602) to generate the second voltage, and output, when the second voltage generated by the second voltage generation means (602) is higher than or equal to another predetermined voltage, a third enable signal to enable the third voltage generation means (603) to generate the third voltage;
first switching means (621) configured to output or stop the first enable signal outputted from the power-on control means (611) in accordance with a first off signal;
second switching means (622) configured to output or stop the second enable signal outputted from the power-on control means (611) in accordance with a second off signal;
third switching means (623) configured to output or stop the third enable signal outputted from the power-on control means (611) in accordance with a third off signal;
a first discharge circuit (624) configured to control a first fall time period taken for the first voltage generation means to be powered off;
a second discharge circuit (625) configured to control a second fall time period taken for the second voltage generation means to be powered off;
a third discharge circuit (626) configured to control a third fall time period taken for the third voltage generation means to be powered off; and
power-off control means (631) configured to output the third off signal to the third switching means (623) after a first time period has elapsed from a power-off instruction, output the second off signal to the second switching means (622) after a second time period longer than the first time period and the third fall time period has elapsed from the power-off instruction, and output the first off signal to the first switching means (621) after a third time period longer than the second time period and the second fall time period has elapsed from the power-off instruction.

2. The electronic device according to Claim 1,
wherein the power-off control means (631) includes a delay circuit (637) for delaying the output timing of the second off signal and a delay circuit (636) for delaying the output timing of the first off signal.

3. The electronic device according to Claim 2,
wherein the delay circuit (637) includes a capacitor and a resistor, and
wherein the second time period is determined in accordance with a capacitance of the capacitor and a resistance value of the resistor.

4. The electronic device according to Claim 1,
wherein the power-on control means (611) includes a comparator (614) configured to compare the first voltage with the predetermined voltage, and
wherein, when the first voltage has become the predetermined voltage or higher, the comparator (614) outputs the second enable signal.

5. The electronic device according to Claim 1,
wherein the electronic device has at least one of a copy function, a print function, a scan function, and a facsimile function.

6. A method for controlling power to a processor (401) of an electronic device including the processor (401), first voltage generation means (601) configured to generate a first voltage to be supplied to the processor (401), in accordance with a first enable signal, second voltage generation means (602) configured to generate a second voltage to be supplied to the processor (401), in accordance with a second enable signal, and third voltage generation means (603) configured to generate a third voltage to be supplied to the processor (401) in accordance with a third enable signal, the method comprising:
outputting the first enable signal to enable the first voltage generation means (601) to generate the first voltage in accordance with a power-on instruction, outputting, when the first voltage generated by the first voltage generation means (601) is higher than or equal to a predetermined voltage, a second enable signal to enable the second voltage generation means (602) to generate the second voltage, and outputting, when the second voltage generated by the second voltage generation means (602) is higher than or equal to another predetermined voltage, a third enable signal to enable the third voltage generation means (603) to generate the third voltage;
wherein the electronic device further comprises
first switching means (621) configured to output or stop the first enable signal outputted from the power-on control means (611) in accordance with a first off signal;
second switching means (622) configured to output or stop the second enable signal outputted from the power-on control means (611) in accordance with a second off signal;
third switching means (623) configured to output or stop the third enable signal outputted from the power-on control means (611) in accordance with a third off signal;
a first discharge circuit (624) configured to control a first fall time period taken for the first voltage generation means to be powered off;
a second discharge circuit (625) configured to control a second fall time period taken for the second voltage generation means to be powered off;
a third discharge circuit (626) configured to control a third fall time period taken for the third voltage generation means to be powered off; and
wherein the method further comprises
outputting the third off signal to the third switching means (623) after a first time period has elapsed from a power-off instruction, outputting the second off signal to the second switching means (622) after a second time period longer than the first time period and the third fall time period has elapsed from the power-off instruction, and output the first off signal to the first switching means (621) after a third time period longer than the second time period and the second fall time period has elapsed from the power-off instruction.

## Patentansprüche

1. Elektronische Vorrichtung, umfassend:
einen Prozessor (401);
eine erste Spannungserzeugungseinrichtung (601), die konfiguriert ist, gemäß einem ersten Freigabesignal eine dem Prozessor (401) zuzuführende erste Spannung zu erzeugen;
eine zweite Spannungserzeugungseinrichtung (602), die konfiguriert ist, gemäß einem zweiten Freigabesignal eine dem Prozessor (401) zuzuführende zweite Spannung zu erzeugen;
eine dritte Spannungserzeugungseinrichtung (603), die konfiguriert ist, gemäß einem dritten Freigabesignal eine dem Prozessor (401) zuzuführende dritte Spannung zu erzeugen;
eine Einschaltsteuereinrichtung (611), die konfiguriert ist, das erste Freigabesignal auszugeben, um der ersten Spannungserzeugungseinrichtung (601) das Erzeugen der ersten Spannung gemäß einer Einschaltanweisung zu ermöglichen, ein zweites Freigabesignal auszugeben, um der zweiten Spannungserzeugungseinrichtung (602) das Erzeugen der zweiten Spannung zu ermöglichen, falls die durch die erste Spannungserzeugungseinrichtung (601) erzeugte erste Spannung höher als oder gleich hoch wie eine vorbestimmte Spannung ist, und ein drittes Freigabesignal auszugeben, um der dritten Spannungserzeugungseinrichtung (603) das Erzeugen der dritten Spannung zu ermöglichen, falls die durch die zweite Spannungserzeugungseinrichtung (602) erzeugte zweite Spannung höher als oder gleich hoch wie eine andere vorbestimmte Spannung ist;
eine erste Umschalteinrichtung (621), die konfiguriert ist, gemäß einem ersten Abschaltsignal das von der Einschaltsteuereinrichtung (611) ausgegebene erste Freigabesignal auszugeben oder anzuhalten;
eine zweite Umschalteinrichtung (622), die konfiguriert ist, gemäß einem zweiten Abschaltsignal das von der Einschaltsteuereinrichtung (611) ausgegebene zweite Freigabesignal auszugeben oder anzuhalten;
eine dritte Umschalteinrichtung (623), die konfiguriert ist, gemäß einem dritten Abschaltsignal das von der Einschaltsteuereinrichtung (611) ausgegebene dritte Freigabesignal auszugeben oder anzuhalten;
eine erste Entladungsschaltung (624), die konfiguriert ist zum Steuern einer ersten Spannungsabfalldauer, die zum Abschalten der ersten Spannungserzeugungseinrichtung benötigt wird;
eine zweite Entladungsschaltung (625), die konfiguriert ist zum Steuern einer zweiten Spannungsabfalldauer, die zum Abschalten der zweiten Spannungserzeugungseinrichtung benötigt wird;
eine dritte Entladungsschaltung (626), die konfiguriert ist zum Steuern einer dritten Spannungsabfalldauer, die zum Abschalten der dritten Spannungserzeugungseinrichtung benötigt wird; und
eine Abschaltsteuereinrichtung (631), die konfiguriert ist zum Ausgeben des dritten Abschaltsignals an die dritte Umschalteinrichtung (623), nachdem seit einer Abschaltanweisung ein erster Zeitraum vergangen ist, zum Ausgeben des zweiten Abschaltsignals an die zweite Umschalteinrichtung (622), nachdem seit der Abschaltanweisung ein zweiter Zeitraum vergangen ist, der länger ist als der erste Zeitraum und die dritte Spannungsabfalldauer; und zum Ausgeben des ersten Abschaltsignals an die erste Umschalteinrichtung (621), nachdem seit der Abschaltanweisung ein dritter Zeitraum vergangen ist, der länger ist als der zweite Zeitraum und die zweite Spannungsabfalldauer.

2. Elektronische Vorrichtung nach Anspruch 1, wobei die Abschaltsteuereinrichtung (631) eine Verzögerungsschaltung (637) zum Verzögern des Ausgabezeitpunkts des zweiten Abschaltsignals und eine Verzögerungsschaltung (636) zum Verzögern des Ausgabezeitpunkts des ersten Abschaltsignals umfasst.

3. Elektronische Vorrichtung nach Anspruch 2,
wobei die Verzögerungsschaltung (637) einen Kondensator und einen Widerstand umfasst, und
wobei der zweite Zeitraum gemäß einer Kapazität des Kondensators und einem Widerstandswert des Widerstands bestimmt wird.

4. Elektronische Vorrichtung nach Anspruch 1,
wobei die Einschaltsteuereinrichtung (611) einen Komparator (614) enthält, der konfiguriert ist, die erste Spannung mit der vorbestimmten Spannung zu vergleichen, und
wobei der Komparator (614) das zweite Freigabesignal ausgibt, wenn die erste Spannung so hoch wie die vorbestimmte Spannung oder höher geworden ist.

5. Elektronische Vorrichtung nach Anspruch 1,
wobei die elektronische Vorrichtung mindestens eine von einer Kopierfunktion, einer Druckfunktion, einer Scanfunktion, und einer Faxfunktion aufweist.

6. Verfahren zum Ansteuern eines Prozessors (401) einer elektronischen Vorrichtung mit Leistung, wobei die elektronische Vorrichtung umfasst: den Prozessor (401), eine erste Spannungserzeugungseinrichtung (601), die konfiguriert ist, gemäß einem ersten Freigabesignal eine dem Prozessor (401) zuzuführende erste Spannung zu erzeugen, eine zweite Spannungserzeugungseinrichtung (602), die konfiguriert ist, gemäß einem zweiten Freigabesignal eine dem Prozessor (401) zuzuführende zweite Spannung zu erzeugen, und eine dritte Spannungserzeugungseinrichtung (603), die konfiguriert ist, gemäß einem dritten Freigabesignal eine dem Prozessor (401) zuzuführende dritte Spannung zu erzeugen, wobei das Verfahren umfasst:
Ausgeben des ersten Freigabesignals, um die erste Spannungserzeugungseinrichtung (601) zum Erzeugen der ersten Spannung gemäß einer Einschaltanweisung zu befähigen, Ausgeben eines zweiten Freigabesignals, um die zweite Spannungserzeugungseinrichtung (602) zum Erzeugen der zweiten Spannung zu befähigen, falls die durch die erste Spannungserzeugungseinrichtung (601) erzeugte erste Spannung höher als oder gleich hoch wie eine vorbestimmte Spannung ist, und Ausgeben eines dritten Freigabesignals, um die dritte Spannungserzeugungseinrichtung (603) zum Erzeugen der dritten Spannung zu befähigen, falls die durch die zweite Spannungserzeugungseinrichtung (602) erzeugte zweite Spannung höher als oder gleich hoch wie eine andere vorbestimmte Spannung ist;
wobei die elektronische Vorrichtung weiterhin umfasst:
eine erste Umschalteinrichtung (621), die konfiguriert ist, gemäß einem ersten Abschaltsignal das von der Einschaltsteuereinrichtung (611) ausgegebene erste Freigabesignal auszugeben oder anzuhalten;
eine zweite Umschalteinrichtung (622), die konfiguriert ist, gemäß einem zweiten Abschaltsignal das von der Einschaltsteuereinrichtung (611) ausgegebene zweite Freigabesignal auszugeben oder anzuhalten;
eine dritte Umschalteinrichtung (623), die konfiguriert ist, gemäß einem dritten Abschaltsignal das von der Einschaltsteuereinrichtung (611) ausgegebene dritte Freigabesignal auszugeben oder anzuhalten;
eine erste Entladungsschaltung (624), die konfiguriert ist zum Steuern einer ersten Spannungsabfalldauer, die zum Abschalten der ersten Spannungserzeugungseinrichtung benötigt wird;
eine zweite Entladungsschaltung (625), die konfiguriert ist zum Steuern einer zweiten Spannungsabfalldauer, die zum Abschalten der zweiten Spannungserzeugungseinrichtung benötigt wird; und
eine dritte Entladungsschaltung (626), die konfiguriert ist zum Steuern einer dritten Spannungsabfalldauer, die zum Abschalten der dritten Spannungserzeugungseinrichtung benötigt wird; und
wobei das Verfahren weiterhin umfasst:
Ausgeben des dritten Abschaltsignals an die dritte Umschalteinrichtung (623), nachdem seit einer Abschaltanweisung ein erster Zeitraum vergangen ist; Ausgeben des zweiten Abschaltsignals an die zweite Umschalteinrichtung (622), nachdem seit der Abschaltanweisung ein zweiter Zeitraum vergangen ist, der länger ist als der erste Zeitraum und die dritte Spannungsabfalldauer; und Ausgeben des ersten Abschaltsignals an die erste Umschalteinrichtung (621), nachdem seit der Abschaltanweisung ein dritter Zeitraum vergangen ist, der länger ist als der zweite Zeitraum und die zweite Spannungsabfalldauer.

## Revendications

1. Dispositif électronique, comprenant :
un processeur (401) ;
un premier moyen de génération de tension (601) configuré pour générer une première tension à appliquer au processeur (401) conformément à un premier signal de validation ;
un deuxième moyen de génération de tension (602) configuré pour générer une deuxième tension à appliquer au processeur (401) conformément à un deuxième signal de validation ;
un troisième moyen de génération de tension (603) configuré pour générer une troisième tension à appliquer au processeur (401) conformément à un troisième signal de validation ;
un moyen de commande de mise sous tension (611) configuré pour délivrer le premier signal de validation de façon à permettre au premier moyen de génération de tension (601) de générer la première tension conformément à une instruction de mise sous tension, pour délivrer, lorsque la première tension générée par le premier moyen de génération de tension (601) est supérieure ou égale à une tension prédéterminée, un deuxième signal de validation de façon à permettre au deuxième moyen de génération de tension (602) de générer la deuxième tension, et pour délivrer, lorsque la deuxième tension générée par le deuxième moyen de génération de tension (602) est supérieure ou égale à une autre tension prédéterminée, un troisième signal de validation de façon à permettre au troisième moyen de génération de tension (603) de générer la troisième tension ;
un premier moyen de commutation (621) configuré pour délivrer ou pour arrêter le premier signal de validation délivré par le moyen de commande de mise sous tension (611) conformément à un premier signal d'arrêt ;
un deuxième moyen de commutation (622) configuré pour délivrer ou pour arrêter le deuxième signal de validation délivré par le moyen de commande de mise sous tension (611) conformément à un deuxième signal d'arrêt ;
un troisième moyen de commutation (623) configuré pour délivrer ou pour arrêter le troisième signal de validation délivré par le moyen de commande de mise sous tension (611) conformément à un troisième signal d'arrêt ;
un premier circuit de décharge (624) configuré pour commander une première période de temps de descente prise pour mettre hors tension le premier moyen de génération de tension ;
un deuxième circuit de décharge (625) configuré pour commander une deuxième période de temps de descente prise pour mettre hors tension le deuxième moyen de génération de tension ;
un troisième circuit de décharge (626) configuré pour commander une troisième période de temps de descente prise pour mettre hors tension le troisième moyen de génération de tension ; et
un moyen de commande de mise hors tension (631) configuré pour délivrer le troisième signal d'arrêt au troisième moyen de commutation (623) après l'écoulement d'une première période de temps à partir d'une instruction de mise hors tension, pour délivrer le deuxième signal d'arrêt au deuxième moyen de commutation (622) après l'écoulement d'une deuxième période de temps plus longue que la première période de temps et que la troisième période de temps de descente à partir de l'instruction de mise hors tension, et pour délivrer le premier signal d'arrêt au premier moyen de commutation (621) après l'écoulement d'une troisième période de temps plus longue que la deuxième période de temps et que la deuxième période de temps de descente à partir de l'instruction de mise hors tension.

2. Dispositif électronique selon la revendication 1,
dans lequel le moyen de commande de mise hors tension (631) comprend un circuit à retard (637) destiné à retarder l'instant de sortie du deuxième signal d'arrêt et un circuit à retard (636) destiné à retarder l'instant de sortie du premier signal d'arrêt.

3. Dispositif électronique selon la revendication 2,
dans lequel le circuit à retard (637) comprend un condensateur et une résistance, et
dans lequel la deuxième période de temps est déterminée conformément à une capacité du condensateur et à une valeur de résistance de la résistance.

4. Dispositif électronique selon la revendication 1,
dans lequel le moyen de commande de mise sous tension (611) comprend un comparateur (614) configuré pour comparer la première tension à la tension prédéterminée, et
dans lequel, lorsque la première tension a pris une valeur supérieure ou égale à la tension prédéterminée, le comparateur (614) délivre le deuxième signal de validation.

5. Dispositif électronique selon la revendication 1,
où le dispositif électronique assure au moins une fonction parmi une fonction de copie, une fonction d'impression, une fonction de balayage et une fonction de télécopie.

6. Procédé de commande de puissance appliquée à un processeur (401) d'un dispositif électronique comprenant le processeur (401), un premier moyen de génération de tension (601) configuré pour générer une première tension à appliquer au processeur (401), conformément à un premier signal de validation, un deuxième moyen de génération de tension (602) configuré pour générer une deuxième tension à appliquer au processeur (401), conformément à un deuxième signal de validation, et un troisième moyen de génération de tension (603) configuré pour générer une troisième tension à appliquer au processeur (401) conformément à un troisième signal de validation, le procédé comprenant les étapes consistant à :
délivrer le premier signal de validation de façon à permettre au premier moyen de génération de tension (601) de générer la première tension conformément à une instruction de mise sous tension, délivrer, lorsque la première tension générée par le premier moyen de génération de tension (601) est supérieure ou égale à une tension prédéterminée, un deuxième signal de validation de façon à permettre au deuxième moyen de génération de tension (602) de générer la deuxième tension, et délivrer, lorsque la deuxième tension générée par le deuxième moyen de génération de tension (602) est supérieure ou égale à une autre tension prédéterminée, un troisième signal de validation de façon à permettre au troisième moyen de génération de tension (603) de générer la troisième tension ;
dans lequel le dispositif électronique comprend en outre
un premier moyen de commutation (621) configuré pour délivrer ou pour arrêter le premier signal de validation délivré par le moyen de commande de mise sous tension (611) conformément à un premier signal d'arrêt ;
un deuxième moyen de commutation (622) configuré pour délivrer ou pour arrêter le deuxième signal de validation délivré par le moyen de commande de mise sous tension (611) conformément à un deuxième signal d'arrêt ;
un troisième moyen de commutation (623) configuré pour délivrer ou pour arrêter le troisième signal de validation délivré par le moyen de commande de mise sous tension (611) conformément à un troisième signal d'arrêt ;
un premier circuit de décharge (624) configuré pour commander une première période de temps de descente prise pour mettre hors tension du premier moyen de génération de tension ;
un deuxième circuit de décharge (625) configuré pour commander une deuxième période de temps de descente prise pour mettre hors tension du deuxième moyen de génération de tension ;
un troisième circuit de décharge (626) configuré pour commander une troisième période de temps de descente prise pour mettre hors tension le troisième moyen de génération de tension ; et
le procédé comprenant en outre l'étape de
délivrer le troisième signal d'arrêt au troisième moyen de commutation (623) après l'écoulement d'une première période de temps à partir d'une instruction de mise hors tension, délivrer le deuxième signal d'arrêt au deuxième moyen de commutation (622) après l'écoulement d'une deuxième période de temps plus longue que la première période de temps et que la troisième période de temps de descente à partir de l'instruction de mise hors tension, et délivrer le premier signal d'arrêt au premier moyen de commutation (621) après l'écoulement d'une troisième période de temps plus longue que la deuxième période de temps et que la deuxième période de temps de descente à partir de l'instruction de mise hors tension.
